# EUROPEAN PATENT SPECIFICATION

(11) **EP 3 561 561 B1**
(45) Date of publication and mention of the grant of the patent: **13.04.2022**
(21) Application number: 18169554.5
(22) Date of filing: 26.04.2018
(51) Int. Cl.: G02B 6/122, G02B 6/126

(54) **OPTICAL SPLITTER INCLUDING A TRIDENT STRUCTURE**
OPTISCHER SPLITTER MIT DREIZACKSTRUKTUR
DIVISEUR OPTIQUE COMPRENANT UNE STRUCTURE TRIDENT

(43) Date of publication of application: 30.10.2019
(73) Proprietor: Huawei Technologies Co., Ltd., Longgang District Shenzhen Guangdong 518129 (CN)
(72) Inventor: DAMAS, Pedro, 80992 Munich (DE); LAMPONI, Marco, 80992 Munich (DE)
(74) Representative: Roth, Sebastian

(56) References cited:
- CN-A- 105 093 408
- US-A1- 2014 270 620
- XIANYAO LI ET AL: "Compact and low-loss silicon power splitter based on inverse tapers", OPTICS LETTERS, OPTICAL SOCIETY OF AMERICA, US, vol. 38, no. 20, 15 October 2013 (2013-10-15), pages 4220-4223, XP001584941, ISSN: 0146-9592, DOI: 10.1364/OL.38.004220 [retrieved on 2013-10-14]
- Xin Xia ET AL: "Analysis of As<sub>2</sub>S<sub>3</sub>-Ti: LiNbO<sub>3</sub> Taper Couplers Using Supermode Theory", Optics and Photonics Journal, vol. 02, no. 04, 1 January 2012 (2012-01-01), pages 344-351, XP055724176, ISSN: 2160-8881, DOI: 10.4236/opj.2012.24043
- LI KAIWEI ET AL: "Ultrasensitive optical microfiber coupler based sensors operating near the turning point of effective group index difference", APPLIED PHYSICS LETTERS, A I P PUBLISHING LLC, US, vol. 109, no. 10, 5 September 2016 (2016-09-05), XP012211747, ISSN: 0003-6951, DOI: 10.1063/1.4961981 [retrieved on 2016-09-05]

## Description

### TECHNICAL FIELD

The present invention relates to an optical splitter, a polarization splitter and rotator (PSR), and an optical multiplexer. The PSR and the optical multiplexer include the optical splitter, and the optical splitter includes specifically a trident structure comprising a tapered first waveguide and two oppositely tapered second waveguides arranged next to the first waveguide. The present invention is specifically suitable for the field of silicon photonics.

### BACKGROUND

Silicon photonics as a new technology is rapidly gaining importance as a generic platform for a wide range of applications in telecom, datacom, interconnect and sensing. It allows implementing photonic functions through the use of Complementary Metal-Oxide-Semiconductor (CMOS) compatible wafer-scale technologies on high quality, low cost silicon substrates. However, pure passive silicon waveguide devices still have limited performance in terms of insertion loss, phase noise (which results in channel crosstalk) and temperature dependency. This is due to the high refractive index contrast between the silicon dioxide (SiO₂) cladding and the silicon (Si) core, and also the non-uniform Si layer thickness and the large thermo-optic effect of Si.

Silicon Nitride (SiN) based passive devices offer superior performance. Propagation loss below 0.1dB/cm has, for instance, been demonstrated for waveguides with a 640 nm thick SiNx core, and even below 0.1dB/m for waveguides with a 50 nm thick core. Also the slightly lower refractive index contrast between SiNx (n = 2) and SiO₂ (n = 1.45) versus Si (n = 3.5) and SiO₂ (n=1.45) results in less phase noise and larger fabrication tolerances. This enables the fabrication of high performance, but still very compact, optical circuits like Arrayed Waveguide Gratings (AWGs) or ring resonators. Silicon nitride waveguides have been reported both as a high performance passive waveguide layer on an active silicon photonics chip, but also as 'stand-alone' passive optical chips.

In a silicon photonics transceiver, the use of multiple modes is advantageous, because information can be encoded in different modes independently. Therefore, the transceiver enables transport of an increased amount of data with a relatively simple architecture with the same amount of optical fiber connections. The modes, which are typically explored, are the fundamental modes for both the Transverse Electric (TE) and Transverse Magnetic (TM) polarizations (i.e. TEO and TMO), and also the first order mode of the TE polarization (i.e. TE1). Therefore, in such a multimode transceiver, the adoption of efficient ways to convert and/or separate the different modes is required, so that the information encoded in each one can be modulated or recovered independently.

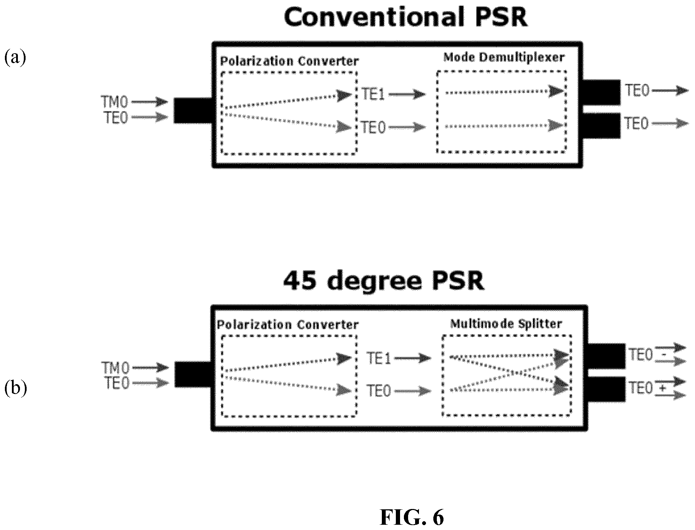

A TEO-TE1 (de)multiplexer is typically achieved by adiabatically converting the TE1 mode signal into a TEO mode propagating in a separate waveguide. Because this requires the coupling of two very different modes propagating in two different waveguides, the result is typically a very long component with a high footprint. A TE-TM conversion and demultiplexing is normally achieved through a PSR component. The typical PSR works by channeling the TEO and TMO input signals into different TEO output signals, as shown in FIG. 6(a). This version of PSR is usually achieved by the combination of a TMO-TE1 converter followed by a TE1-TEO demultiplexer.

Recently a different type of PSR has been proposed, namely the 45 degree PSR, which has a considerable smaller footprint. In the 45 degree PSR the output signal is a combination of both TM and TE input signals, as shown in FIG. 6(b). In this case, the demultiplexer is replaced by a multimode splitter that equally splits the power of both the TEO and TE1 modes into the output branches.

The development of an efficient TE0-TE1 splitter is thus required for efficiently splitting the power of both modes, not only in the 45 degree PSR, but also in any application that requires the combination/splitting of TEO and TE1 modes.

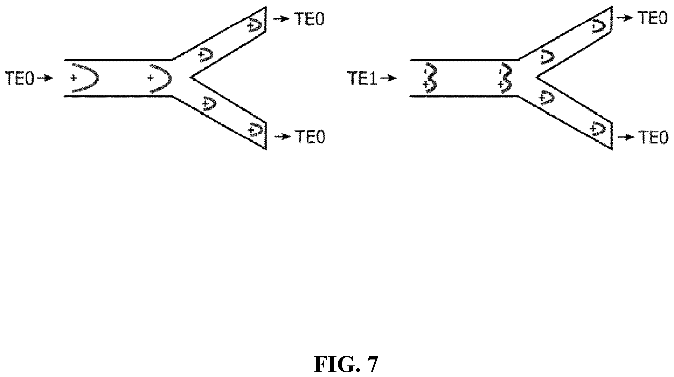

The equal split of both TEO and TE1 modes into two different waveguides requires that the initial waveguide is capable of accommodating both TEO and TE1 modes and split their power equally in the two output waveguides. To date this can be achieved by using a Y-junction or a directional coupler as shown in FIG. 7. This Y-junction consists of a waveguide that is split in two branches, guiding the power equally into the two output waveguides, as shown below.

US 2014/270620 A1 relates to modal rotation in optical waveguides, and discloses in Fig. 2 and paragraphs [0025]-[0040] an optical waveguide structure including an adiabatic Y-splitter that comprises three tapering portions to receive and split TE0 and TE1 mode optical signals into two optical waveguide paths. CN 105 093 408 A discloses a silicon-based nanowire polarization beam splitter based on mode evolution principle.

### SUMMARY

Since the solution described above involves an abrupt transition from a single waveguide into two waveguides, this structure requires layout optimizations to achieve both low losses and the desired equal splitting of the power between the two branches. Therefore, the Y-junction is very sensitive to any deviations from the optimal design layout and fabrication errors, making it a difficult structure to fabricate consistently. Any deviations from the optimum design can result not only in output losses, but also in imbalances in the distribution of the power between the two output waveguides. This can be very detrimental to the performance of the final device, and thus a solution should be found that can be used as an alternative to this approach.

In view of the above-mentioned challenges and disadvantages, the present invention aims to improve the conventional structures and applications. The present invention has particularly the objective to provide an efficient, low loss and wideband solution for the splitting of a multimode signal into two decoupled single mode signals. In particular, the invention seeks a solution for splitting both the fundamental TE mode (TE0) and first order TE mode (TE1) of a multimode signal into two decoupled and orthogonal TE0 single mode signals propagating in separate waveguides. Accordingly, the present invention aims for an optical splitter, which is compact (small footprint), and able to split adiabatically the multimode signal. This should be possible without the need of using abrupt transitions that are highly sensitive to fabrication variations, and can easily be very lossy if the outcome is not exactly the expected one. The present invention also aims for an improved PSR and optical multiplexer, and particularly a demultiplexer.

The objective of the present invention is achieved by the solution provided in the enclosed independent claims. Advantageous implementations of the present invention are further defined in the dependent claims. In the following, parts of the description and drawings referring to embodiments which are not covered by the claims are not presented as embodiments of the invention, but as examples useful for understanding the invention.

In particular the present invention proposes an optical splitter with a trident (waveguide) structure, which is capable of propagating a multimode signal (e.g. the zero and first order modes of both TE and TM polarizations), in order to effectively convert this multimode signal adiabatically into two single mode signals, particularly to the even and odd super-modes, respectively, of two output waveguides.

The technical core principle of the invention relies on achieving the adiabatic transition of the effective indices of the multiple mode signal at the input, in order to match the effective index of the even/odd single modes of the two waveguides at the output. For this to be accomplished, the waveguides of the trident structure are tailored and engineered with dimensions, allowing the input cross-section to accommodate the multimode signal, e.g. both the fundamental and the first order modes, and the output cross-sections to accommodate a single mode signal each, e.g. the even and odd modes. Furthermore, also the total length of the trident structure is tailored to allow the required conversion between those signals (modes).

A first aspect of the present invention provides an optical splitter according to claim 1. The optical splitter of the first aspect provides a solution for an efficient, low loss and wideband splitting of the multimode signal into the two (decoupled) single mode signals. In particular, the multimode signal can be split adiabatically into the single mode signals. Furthermore, the optical splitter can be constructed compactly, i.e. with a very small footprint. The optical splitter is also much more insensitive to fabrication variations than conventional solutions.

According to the invention, the first and second waveguides are made of SiN.

A second aspect of the present invention provides a PSR comprising an optical splitter according to the first aspect or any of its implementation forms.

In an implementation form of the second aspect, the PSR comprises a polarization converter configured to receive an input optical signal including at least two modes of different polarization and to convert the input optical signal into the multimode optical signal.

The PSR of the second aspect enjoys all the advantages of the optical splitter described above. In particular, the PSR, by means of the optical splitter, works completely adiabatically. Further, the PSR can be constructed with a reduced footprint, while also ensuring wideband, low loss, and fabrication insensitivity.

A third aspect of the present invention provides an optical multiplexer, comprising an optical splitter according to the first aspect or any of its implementation forms.

In an implementation form of the third aspect, the optical multiplexer is configured to receive two single mode optical input signals and provide each single mode optical input signal to the base of one of the two second waveguides of the optical splitter, wherein the optical splitter is configured to adiabatically multiplex the single mode optical input signals propagating in the second waveguides towards their tips into a multimode optical output signal propagating in the first waveguide towards its base.

The optical multiplexer of the third aspect enjoys all the advantages of the optical splitter described above. In particular, the multiplexer can efficiently and adiabatically multiplex the single mode signals into the multimode signal. Thereby, the footprint of the multiplexer can be made very small. The optical multiplexer of the third aspect may also work as a demultiplexer.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities.

Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- FIG. 1: shows an optical splitter according to an embodiment of the present invention.
- FIG. 2: shows a simulated mode conversion in an optical splitter according to an embodiment of the present invention.
- FIG. 3: shows a simulation of a transmitted power in an optical splitter according to an embodiment of the present invention.
- FIG. 4: shows an optical splitter according to an embodiment of the present invention.
- FIG. 5: shows a PSR and an optical multiplexer, respectively, according to embodiments of the present invention.
- FIG. 6: shows a conventional PSR and an exemplary 45 degree PSR.
- FIG. 7: shows a waveguide structure that is split into two branches for splitting a multimode signal.

### DETAILED DESCRIPTION OF EMBODIMENTS

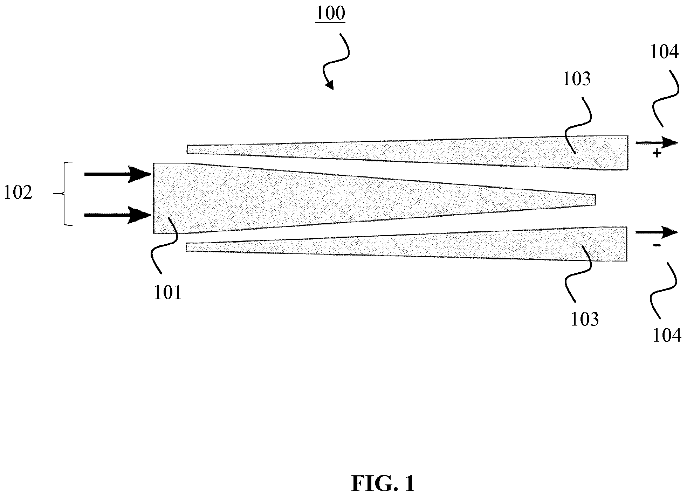

FIG. 1 shows an optical splitter 100 useful for understanding the present invention.

The optical splitter 100 is configured to split a multimode signal 102 into two single mode signals 104.

To this end, the optical splitter 100 comprises a tapered first waveguide 101 configured to receive the multimode optical signal 102 at its base, i.e. at its wider end, and to propagate the multimode signal 102, particularly towards its tip, i.e. its narrower end. Further, the optical splitter 100 comprises two tapered second waveguides 103, which are arranged in parallel and on different sides of the first waveguide 101. Each second waveguide 103 is oppositely tapered than the first waveguide 101. Further, each second waveguide 103 is configured to propagate a single mode signal 104, particularly from its tip to its base, and output the single mode optical signal 104 at its base, i.e. its wider end.

The optical splitter 100, particularly by means of the trident structure formed by the first waveguide 101 and the second waveguides 103, respectively, is configured to adiabatically split the multimode optical signal 102 propagating in the first waveguide 101 towards its tip into the two single mode signals 104 propagating in the second waveguides 103 towards their bases.

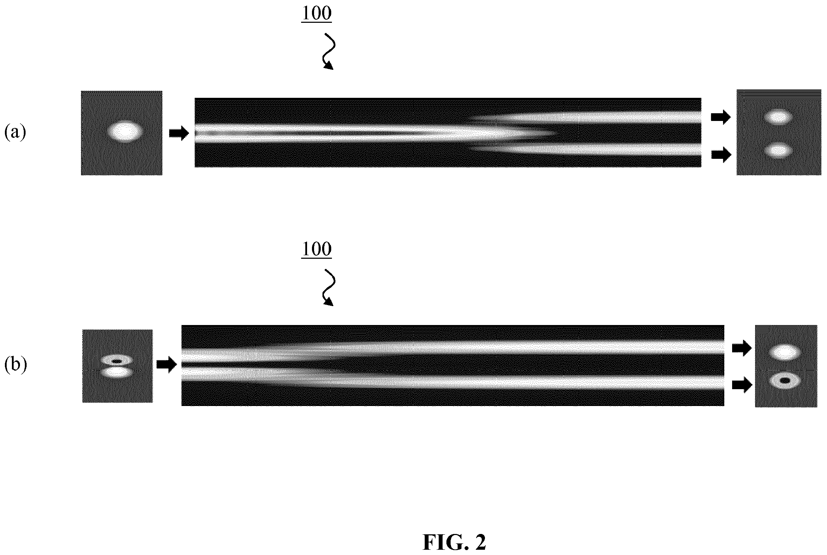

The optical splitter 100 shown in FIG. 1 thus solves the above-mentioned objective by taking advantage of an adiabatic transition between the modes in the three waveguides 101, 103 composing the trident structure. In this trident structure, the input waveguide 101 may, in an example not forming part of the invention, be about 1.5 µm wide at its base, which is large enough to accommodate the modes of the multimode signal 104, e.g. both the TEO and TE1 modes. On the other end, the trident structure is made of the two, particularly identical, waveguides 103, which can accommodate e.g. an even and odd super-mode. The even/odd super-mode is the name given to the situation where the two output waveguides 103, with respect to one another, propagate a mode with the same amplitude and a phase difference of zero(pi) radians (see in this respect FIG. 2).

A particular feature of the trident structure is the progressive change of the effective index (which is a measure of the overall refractive index of the materials interacting with that particular mode) of the two modes. The dimensions of the trident structure may thus particularly be engineered such that the progressive change of the effective index of the modes of the multimode signal 102 (e.g. TEO and TE1 modes) during the propagation inside the trident structure, makes them couple, respectively, to the modes of the single mode signals 104 (e.g. even and odd super-modes) in the two waveguides 103 at the output (i.e. at their bases). This may be achieved by adiabatically matching the effective index of the (TE0/TE1) input modes with the output modes (EVEN/ODD output super-mode).

Accordingly, the optical splitter 100 of FIG. 1 may specifically be characterized by the ability of making two adiabatic mode conversions: TEO mode into an even super-mode, and TE1 mode into an odd super-mode. The simulation results of this mechanism are depicted in FIG. 2, first the even mode (FIG. 2(a)) and then the odd mode conversion (FIG. 2(b)).

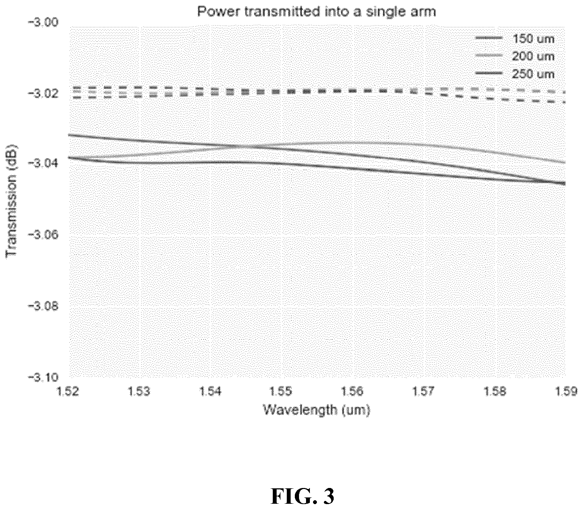

FIG. 3 shows further Fine Difference Time Domain (FDTD) simulations of the expected power collected in one of the output waveguides 103, when an even (full line) and odd (dashed line) is inserted in the output. The lossless condition is obtained for -3dB (half of the power). It can be seen that for any length of the trident structure composed of waveguides 101 and 103, between 150 µm and 250 µm, for any wavelength in the C-Band (which can be also achieved in the O band with the right design) and for both ODD and EVEN conversions, the loss is lower than 0.05dB. This shows that this is an extremely robust component with an incredible performance for the desired working principle.

Thus, the optical splitter 100 of FIG. 1 provides an efficient and robust way to separate the modes of the multimode signal 104 propagating inside of the first waveguide 101, showing relevant benefits in comparison to the typical Y-junction (compare FIG. 7). Namely, the coupling process occurring in the optical splitter 100 is adiabatic and allows lower coupling losses and reflections and a high level of process tolerances than the typical Y-junction (as supported by the simulations in FIG. 3).

All previous reasoning made to the TE polarization can be applied in the same way to TM polarization modes propagating in the waveguides 101 and 103.

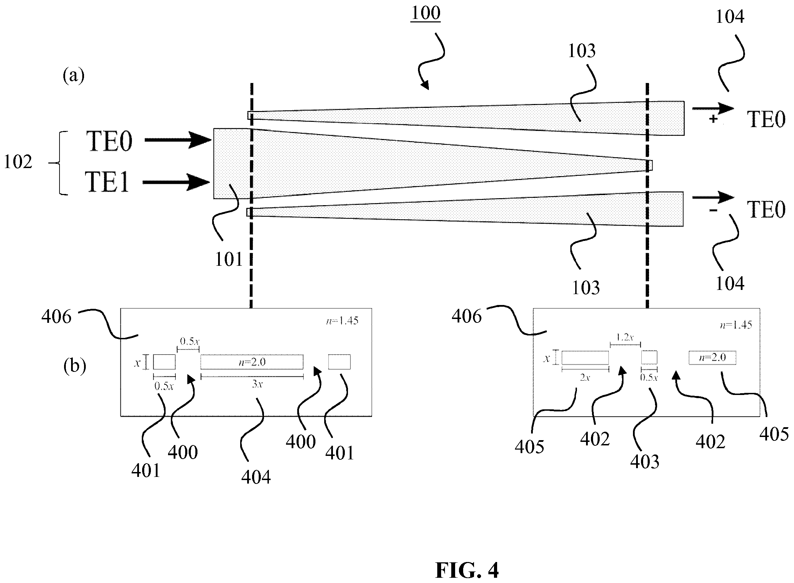

The dimensions of the trident structure of the optical splitter 100 may depend on the used material platform (meaning the thickness and refractive index of the different layers) and may for best performance be adapted accordingly. An example of a typical dimensions for specific refractive indices of the core and cladding, and for the TE polarization, is explained in the following with respect to FIG. 4.

FIG. 4 shows an optical splitter 100 according to an embodiment of the present invention, which builds on the optical splitter 100 shown in FIG. 1. Identical elements in FIG. 1 and FIG. 4 are labeled with the same reference signs. The optical splitter 100 of FIG. 4 has also the first waveguide 101 and the two second waveguides 103. In the optical splitter 100 of FIG. 4, the first waveguide 101 and the two second waveguides 103 are made of SiN. Accordingly, they have a refractive index of n = 2. Further, the three waveguides 101 and 103 are embedded into a cladding 406, made of SiO₂. Accordingly, the cladding has particularly a refractive index of n = 1.45.

Furthermore, and as an example not forming part of the invention, specific ratios of dimensions (i.e. width and height) of the waveguides 101 and 103 are shown in FIG. 4 (indicated in Fig. (a) and (b) ). In particular, a width 404 of the base of the first waveguide 101 is generally 5-7 times, specifically 6 times, the width 401 of each tip of the second waveguides 103. Further, a width 405 of each base of the second waveguides 103 is generally 3-5 times, specifically 4 times, the width 403 of the tip of the first waveguide 101. Further, a height of each second waveguide 103 is generally 1.8-2.2 times, specifically 2 times, the width 401 of its tip. Further, a height of the first waveguide 101 is generally 1.8-2.2 times, specifically 2 times, the width 403 of its tip. The height of the first waveguide 101 and the height of the second waveguides 103 is particularly equal.

According to the invention, the height of the waveguides 101 and 103 is 400 nm, the width 401 and 403 of the respective tips is 200 nm, the width of the base of the first waveguide 101 is and the bases of the second waveguides 103 are Moreover, at the tips of the second waveguides 103, a gap 400 between the first waveguide 101 and each second waveguide 103 is equal to the width 401 of each tip of the second waveguides 103. Further, at the tip of the first waveguide 101, a gap 402 between the first waveguide 101 and each second waveguide 103 is 2-3 times the width 403 of the tip of the first waveguide 101.

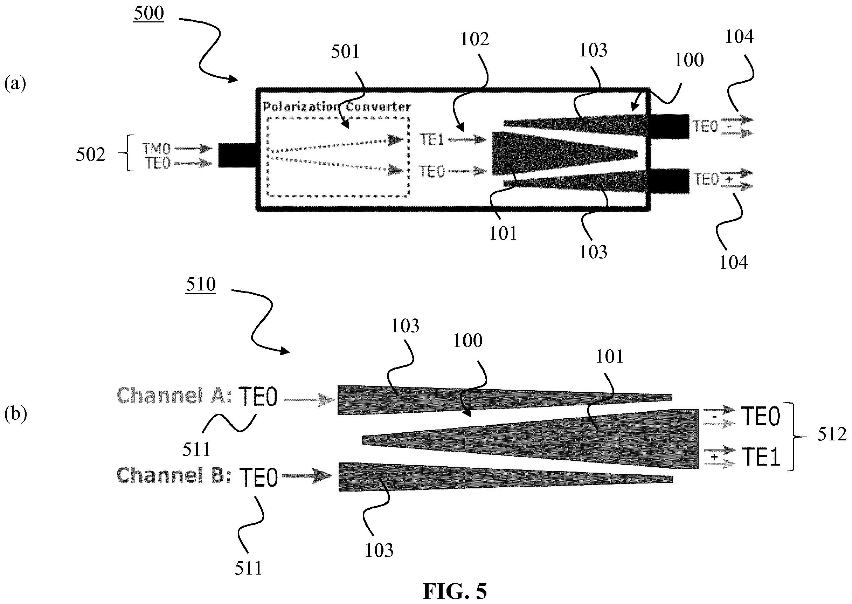

Furthermore, the optical splitter 100 according to embodiments of the present invention, as shown in FIG.4, can be used in specific applications as explained in the following with respect to FIG. 5.

FIG. 5 shows particularly in (a) a PSR 500 comprising an optical splitter 100 according to an embodiment of the present invention, and in (b) an optical multiplexer 510 including an optical splitter 100 according to an embodiment of the present invention.

The PSR 500 is in particular a 45 degree PSR including the optical splitter 100. The PSR 500 includes a first component (referred to as a polarization converter 501) that converts an input optical signal 502 including at least two modes of different polarization into the multimode optical signal 102, for example, converting a TMO and TEO mode of the input optical signal 502 into a TE1 mode and TEO mode of the multimode signal 102. That means, the TMO mode of the input optical signal 502 is converted into the TE1 mode of the multimode optical signal 102. A second component of the PSR 500 (namely the optical splitter 100) is configured to then split the multimode optical signal 102 into the two single mode optical signals 104. In particular, the optical splitter 100 can split the TEO and TE1 modes of the multimode signal 102 equally in a 45 degrees combination.

The present invention can thus be applied in a 45 degree PSR configuration. Notably, the optical splitter 100 may thereby replace a Y-junction in the conventional 45 degree PSR as shown in FIG. 7. The application of the optical splitter 100 to this approach of the PSR 500 represents a viable solution to have a 45 degree PSR that works 100% adiabatically, while reducing the footprint and also ensuring wideband, low loss and fabrication variation insensitivity.

The optical multiplexer 510 is particularly a Wavelength Division Multiplexing (WDM) FUNKY multiplexer (may also work as demultiplexer). Here, the optical splitter 100 is used to combine two single mode optical input signals 511 (two single mode channels A and B), e.g. comprising two TEO modes, into a single waveguide 101 carrying orthogonal combinations of these e.g. TE1 and TEO modes, as a multimode optical output signal 512.

In other words, as shown in FIG. 5(b) the optical multiplexer 510 is configured to receive two single mode optical input signals 511 and provide each single mode optical input signal 511 to the base of one of the two second waveguides 103 of the optical splitter 100. The optical splitter 100 in the multiplexer 510 is configured to adiabatically multiplex the single mode optical input signals 511 propagating in the second waveguides 103 towards their tips into a multimode optical output signal 512 propagating in the first waveguide 101 towards its base.

The use of the optical splitter 100 in the optical multiplexer 510 allows a shorter solution compared to e.g. a regular TEO-TE1 multiplexer used in Coarse WDM (CWDM) products (funky design), where the TEO modes of two different WDM channels are multiplexed into a combination of TEO and TE1 modes. By using the optical splitter 100, the multiplexer 510 can efficiently and adiabatically multiplex the single modes 511 from two different channels into a single waveguide 101 carrying an orthogonal 45 degree combination of the input modes 511. The output signal 512 will contain the information of both channels A and B, but projected in e.g. a TE1 and TEO basis.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Optical splitter (100), comprising:
a tapered first waveguide (101) configured to receive a multimode optical signal (102) at its base and propagate the multimode signal (102) towards its tip, wherein the multimode optical signal (102) includes a fundamental transverse electric, TE, mode and a first order TE mode; and
two tapered second waveguides (103) arranged in parallel on different sides of the first waveguide (101), each second waveguide (103) being oppositely tapered than the first waveguide (101) and being configured to propagate a single mode optical signal (104) towards its base and output the single mode optical signal at its base, wherein each single mode optical signal (104) includes a fundamental TE mode,
wherein the optical splitter (100) is configured to adiabatically split the multimode optical signal (102) propagating in the first waveguide (101) towards its tip into the two single mode optical signals (104) propagating in the second waveguides (103) towards their bases,
wherein the first waveguide (101) and the second waveguides (103) are made of SiN,
wherein the first waveguide (101) and the second waveguides (103) are embedded into a SiO₂ cladding,
wherein a height of the first waveguide (101) and of the two second waveguides (103) is, respectively, 400 nm,
wherein a width (404) of the base of the first waveguide (101) is 1.2 µm,
wherein a width (405) of the bases of the two second waveguides (103) is 800 nm, respectively,
wherein a width (401, 403) of the tip of the first waveguide (101) and of the tips of the two second waveguides (103) is 200 nm, respectively,
wherein a gap (400) between the first waveguide (101) and each second waveguide (103) at the tips of the second waveguides (103) is 200 nm, and
wherein a gap (402) between the first waveguide (101) and each second waveguide (103) at the tip of the first waveguide (101) is 400-600 nm.

2. Polarization splitter (500) and rotator, PSR, comprising
an optical splitter (100) according to claim 1.

3. PSR (500) according to claim 2, comprising
a polarization converter (501) configured to receive an input optical signal (502) including at least two modes of different polarization and to convert the input optical signal (502) into the multimode optical signal (102).

4. Optical multiplexer (510), comprising
an optical splitter (100) according to claim 1.

5. Optical multiplexer (510) according to claim 4, configured to
receive two single mode optical input signals (511) and provide each single mode optical input signal (511) to the base of one of the two second waveguides (103) of the optical splitter (100),
wherein the optical splitter (100) is configured to adiabatically multiplex the single mode optical input signals (511) propagating in the second waveguides (103) towards their tips into a multimode optical output signal (512) propagating in the first waveguide (101) towards its base.

## Patentansprüche

1. Optischer Splitter (100), der Folgendes umfasst:
einen sich verjüngenden ersten Wellenleiter (101), der konfiguriert ist, um ein optisches Multimodensignal (102) an seiner Basis zu empfangen und das Multimodensignal (102) zu seiner Spitze auszubreiten, wobei das optische Multimodensignal (102) einen transversalen elektrischen (transverse electric - TE) Grundmodus und einen TE-Modus erster Ordnung beinhaltet; und
zwei sich verjüngende zweite Wellenleiter (103), die parallel auf verschiedenen Seiten des ersten Wellenleiters (101) angeordnet sind, wobei jeder zweite Wellenleiter (103) entgegengesetzt zu dem ersten Wellenleiter (101) verjüngt und konfiguriert ist, um ein optisches Einzelmodussignal (104) zu seiner Basis auszubreiten und das optische Einzelmodussignal an seiner Basis auszugeben, wobei jedes optische Einzelmodussignal (104) einen TE-Grundmodus beinhaltet,
wobei der optische Splitter (100) konfiguriert ist, um das optische Multimodensignal (102), das sich in dem ersten Wellenleiter (101) zu seiner Spitze ausbreitet, in die zwei optischen Einzelmodussignale (104), die sich in den zweiten Wellenleitern (103) zu ihren Basen ausbreiten, adiabatisch zu splitten,
wobei der erste Wellenleiter (101) und die zweiten Wellenleiter (103) aus SiN hergestellt sind,
wobei der erste Wellenleiter (101) und die zweiten Wellenleiter (103) in einen SiO₂-Mantel eingebettet sind,
wobei eine Höhe des ersten Wellenleiters (101) beziehungsweise der zwei zweiten Wellenleiter (103) 400 nm beträgt,
wobei eine Breite (404) der Basis des ersten Wellenleiters (101) 1,2 µm beträgt,
wobei eine Breite (405) der Basen der zwei zweiten Wellenleiter (103) 800 nm beträgt, beziehungsweise
wobei eine Breite (401, 403) der Spitze des ersten Wellenleiters (101) und der Spitzen der zwei zweiten Wellenleiter (103) 200 nm beträgt, beziehungsweise
wobei ein Spalt (400) zwischen dem ersten Wellenleiter (101) und jedem zweiten Wellenleiter (103) an den Spitzen der zweiten Wellenleiter (103) 200 nm beträgt, und
wobei ein Spalt (402) zwischen dem ersten Wellenleiter (101) und jedem zweiten Wellenleiter (103) an der Spitze des ersten Wellenleiters (101) 400-600 nm beträgt.

2. Polarisationssplitter (500) und Rotator (polarization splitter and rotator - PSR), der Folgendes umfasst:
einen optischen Splitter (100) nach Anspruch 1.

3. PSR (500) nach Anspruch 2, der Folgendes umfasst:
einen Polarisationswandler (501), der konfiguriert ist, um ein optisches Eingangssignal (502) zu empfangen, das wenigstens zwei Modi von verschiedener Polarisation beinhaltet, und um das optische Eingangssignal (502) in das optische Multimodensignal (102) umzuwandeln.

4. Optischer Multiplexer (510), der Folgendes umfasst:
einen optischen Splitter (100) nach Anspruch 1.

5. Optischer Multiplexer (510) nach Anspruch 4, der für Folgendes konfiguriert ist:
Empfangen von zwei optischen Einzelmoden-Eingangssignalen (511) und Bereitstellen jedes optischen Einzelmoden-Eingangssignals (511) an die Basis eines der zwei zweiten Wellenleiter (103) des optischen Splitters (100),
wobei der optische Splitter (100) konfiguriert ist, um die optischen Einzelmoden-Eingangssignale (511), die sich in den zweiten Wellenleitern (103) zu ihren Spitzen ausbreiten, in ein optisches Multimodenausgangssignal (512) adiabatisch zu multiplexen, das sich in dem ersten Wellenleiter (101) zu seiner Basis ausbreitet.

## Revendications

1. Diviseur optique (100), comprenant :
un premier guide d'ondes conique (101) configuré pour recevoir un signal optique multimode (102) à sa base et propager le signal multimode (102) vers sa pointe, le signal optique multimode (102) comportant un mode électrique transversal fondamental, et un mode TE de premier ordre ; et
deux seconds guides d'ondes coniques (103) disposés en parallèle sur différents côtés du premier guide d'ondes (101), chaque second guide d'ondes (103) étant conique de manière opposée au premier guide d'ondes (101) et étant configuré pour propager un signal optique monomode (104) vers sa base et délivrer le signal optique monomode à sa base, chaque signal optique monomode (104) comportant un mode TE fondamental,
dans lequel le diviseur optique (100) est configuré pour diviser de manière adiabatique le signal optique multimode (102) se propageant dans le premier guide d'ondes (101) vers sa pointe en deux signaux optiques monomodes (104) se propageant dans les seconds guides d'ondes (103) vers leurs bases,
dans lequel le premier guide d'ondes (101) et les seconds guides d'ondes (103) sont en SiN,
dans lequel le premier guide d'ondes (101) et les seconds guides d'ondes (103) sont intégrés dans une gaine de SiO₂,
dans lequel une hauteur du premier guide d'ondes (101) et des deux seconds guides d'ondes (103) est, respectivement, de 400 nm,
dans lequel une largeur (404) de la base du premier guide d'ondes (101) est de 1,2 µm,
dans lequel une largeur (405) des bases des deux seconds guides d'ondes (103) est de 800 nm, respectivement,
dans lequel une largeur (401, 403) de la pointe du premier guide d'ondes (101) et des pointes des deux seconds guides d'ondes (103) est de 200 nm, respectivement,
dans lequel un espace (400) entre le premier guide d'ondes (101) et chaque second guide d'ondes (103) aux pointes des seconds guides d'ondes (103) est de 200 nm, et
dans lequel un espace (402) entre le premier guide d'ondes (101) et chaque second guide d'ondes (103) à la pointe du premier guide d'ondes (101) est compris entre 400 et 600 nm.

2. Diviseur de polarisation (500) et rotateur, PSR, comprenant
un diviseur optique (100) selon la revendication 1.

3. PSR (500) selon la revendication 2, comprenant
un convertisseur de polarisation (501) configuré pour recevoir un signal optique d'entrée (502) comportant au moins deux modes de polarisation différente et pour convertir le signal optique d'entrée (502) en signal optique multimode (102).

4. Multiplexeur optique (510), comprenant
un diviseur optique (100) selon la revendication 1.

5. Multiplexeur optique (510) selon la revendication 4, configuré pour
recevoir deux signaux d'entrée optiques monomodes (511) et fournir chaque signal d'entrée optique monomode (511) à la base de l'un des deux seconds guides d'ondes (103) du diviseur optique (100),
dans lequel le diviseur optique (100) est configuré pour multiplexer de manière adiabatique les signaux d'entrée optiques monomodes (511) se propageant dans les seconds guides d'ondes (103) vers leurs pointes en un signal de sortie optique multimode (512) se propageant dans le premier guide d'ondes (101) vers sa base.
